# EUROPÄISCHE PATENTSCHRIFT

(11) **EP 1 375 311 B1**
(45) Veröffentlichungstag und Bekanntmachung des Hinweises auf die Patenterteilung: **18.07.2007**
(21) Anmeldenummer: 03007572.5
(22) Anmeldetag: 02.04.2003
(51) Int. Cl.: B62D 25/04, B62D 29/04

(54) **Aufbaustruktur für ein Fahrzeug, insbesondere einen Personenkraftwagen**
Body structure for a vehicle, especially a motor vehicle
Structure de carrosserie de véhicule, notamment un véhicule automobile

(30) Priorität: 29.06.2002 DE 10229400
(43) Veröffentlichungstag der Anmeldung: 02.01.2004
(73) Patentinhaber: Dr.Ing. h.c. F. Porsche Aktiengesellschaft, 70435 Stuttgart (DE)
(72) Erfinder: Steinhauser, Dieter, 73630 Remshalden (DE); Meier, Thomas, 76287 Rheinstetten (DE)

(56) Entgegenhaltungen:
- DE-C- 716 895
- US-A- 3 550 948
- US-A- 5 076 632
- US-A- 5 853 857

## Beschreibung

Die Erfindung betrifft eine Aufbaustruktur für ein Fahrzeug, insbesondere einen Personenkraftwagen nach dem Oberbegriff des Patentanspruchs 1.

Ein bekannter, US 5,076,632, Aufbau ist für einen offenen Personenkraftwagen ausgebildet, bei dem zwischen einem Windschutzscheibenrahmen und einem hinteren Aufbaubereich keine festen Aufbauträger vorgesehen sind. Der Windschutzscheibenrahmen umfasst einen umlaufenden metallischen Rohrträger, der mittels eines Trägers aus Schaumstoff und einer letzteren umgebenden Hüllwand verkleidet ist.

Aus der US 5,853,857 ist ein Windschutzscheibenrahmen aus faserverstärktem Kunststoff bekannt, wobei der Windschutzscheibenrahmen aus zwei Schalen besteht und sich aus einem oberen quer verlaufenden Abschnitt und zwei seitlichen, sich in Fahrzeuglängsrichtung erstreckenden Abschnitten zusammensetzt.

Die EP 0 286 058 A2 befasst sich mit einem selbsttragenden Strukturelement aus Verbundwerkstoff für einen Fahrzeugaufbau, das durch ein Wandteil gebildet wird. Das Wandteil weist einen Zwischenkörper auf, der von Deckschichten begrenzt wird. Dieses Strukturelement soll ein gutes Festigkeits/Gewichts-Verhältnis aufweisen.

Aus der US 3,145,000 geht ein hochfestes glasfaserverstärktes Bauteil für eine Tragfläche eines Flugkörpers hervor, welche Tragfläche mit einem Wandabschnitt versehen ist, der einen in Deckwände eingebetteten Kern bspw. aus einer Honigwabenstruktur besitzt.

Aufgabe der Erfindung ist es eine Aufbaustruktur für eine Fahrzeug, insbesondere einen Personenkraftwagen zu schaffen, die eine Fahrgastzelle mit einem hochfesten und leicht in die Aufbaustruktur integrierbaren Windschutzscheibenrahmen umfasst.

Erfindungsgemäß wird diese Aufgabe durch die Merkmale des Patentanspruchs gelöst. Weitere, die Erfindung ausgestaltende Merkmale sind in den Unteransprüchen enthalten. Die mit der Erfindung hauptsächlich erzielten Vorteile sind darin zu sehen, dass die Wandstruktur und der Windschutzscheibenrahmen aus im wesentlichen gleichem d.h. hochfestem nicht metallischem Werkstoff - faserverstärktem Kunststoff; CFK - bestehen -, was nicht nur zu einer materialgleichen Konstruktion verschiedener Bauteile der Aufbaustruktur führt, sondern auch die Möglichkeit eröffnet, einen besonders steifen Windschutzscheibenrahmen zu schaffen. Auch lassen sich durch diese Werkstoffwahl Fertigungsprozesse optimieren. Erfindungsgemäß ist der Windschutzscheibenrahmen auf einer der Wandstruktur zugekehrten Seite mit Flanschen versehen, die mittels Klebungen an einem ersten Wandabschnitt und einem zweiten Wandabschnitt der Wandstruktur in Lage gehalten sind. Dies trägt zu einer funktionsgerechten Verbindung der besagten Bauteile bei.

In Hohlräumen der aufrechten Säulen des Windschutzscheibenrahmens sind Stützsäulen vorgesehen, die in Verbindung mit den Säulen des Windschutzscheibenrahmens den Schutz der Insassen unterstützen, dergestalt, dass bei einem Mehrfachüberschlag des Personenkraftwagens die Stützsäulen zusätzlich zu den Säulen des Windschutzscheibenrahmens wirksam werden. Zur Verbindung der aus Metall bestehenden Stützsäulen dienen mit letzteren verbundene Halteplatten, die sich an der Wandstruktur abstützen. Dabei sind die Halteplatten unter Vermittlung von Schrauben an besagter Wandstruktur gehalten.

In der Zeichnung wird ein Ausführungsbeispiel der Erfindung gezeigt, das nachstehend näher beschrieben ist.

Es zeigen
- Fig. 1: eine Ansicht von oben auf einen Personenkraftwagen mit der Aufbaustruktur nach der Erfindung,
- Fig. 2: einen Schnitt nach der Linie II-II der Fig.1 in größerem Maßstab,
- Fig. 3: eine Schrägansicht auf eine Säule eines Windschutzscheibenrahmens der Aufbaustruktur,
- Fig. 4: einen Schnitt etwa entlang der Linie IV-IV der Fig. 3 in größerem Maßstab.

Von einem Personenkraftwagen 1 der offenen Bauart ist im wesentlichen nur ein Aufbau 2 dargestellt, der eine Aufbaustruktur 3 umfasst. Die Aufbaustruktur 3 ist eine Fahrgastzelle 4 mit einem Fahrgastraum 5, der Aufnahmen 6 und 7 für zwei nebeneinander angeordnete lediglich schematisch angedeutete Fahrzeugsitze 8 und 9 aufweist. Die Fahrgastzelle 4 besteht aus hochfestem nicht metallischem Werkstoff bspw. faserverstärktem Kunststoff-Verbundwerkstoff CFK - und besitzt ein Wandgebilde 10 mit einer vorderen Wandstruktur 11 und einer hinteren Wandstruktur 12, die an eine Bodenstruktur 13 angegliedert. Die Bodenstruktur 13 wird an Längsseiten 14,15 von sich zwischen den Wandstrukturen 11 und 12 erstreckenden im Querschnitt kastenförmigen Längsträgern 16,17 begrenzt, und sie weist einen Mitteltunnel 18 auf, der zwischen der vorderen Wandstruktur 11 und der hinteren Wandstruktur 12 verläuft; die Längsträger 16,17 und der Mitteltunnel 18 erstrecken sich in Fahrzeuglängsrichtung A-A.

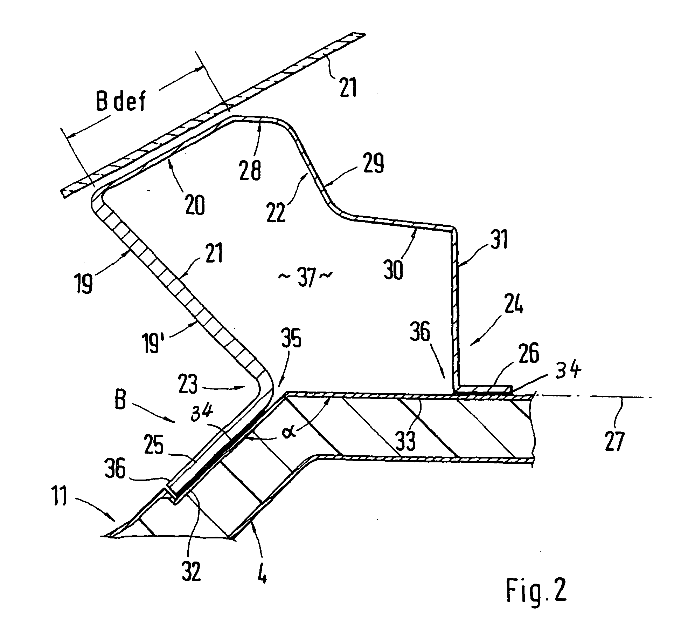

Gemäß Fig. 2 sind die vordere Wandstruktur 11 und ein nicht metallischer Windschutzscheibenrahmen 19 baulich vereinigt; der Windschutzscheibenrahmen 19 besteht wie die übrige Aufbaustruktur 3 bzw. Fahrgastzelle 4 ebenfalls aus hochfestem faserverstärktem Kunststoff - CFK -. Dabei ist der Windschutzscheibenrahmen 19 als Hohlträger 19, ausgeführt - Fig. 2 -, der auf einer der Fahrgastzelle 4 zugekehrten Seite B eine Auflagewand 20 mit einer definierten Breite Bdef für eine Windschutzscheibe 21 umfasst, welche Auflagewand 20 mit Stützwänden 21,22 versehen ist, deren freie Enden 23,24 mit Flanschen 25,26 versehen sind. Zwischen Auflagewand 20 und Windschutzscheibe 21 sind ein oder mehre Dichtkörper mit Klebefunktion vorgesehen. Die Stützwand 21 verläuft stumpfwinkelig oder im rechten Winkel zur Auflagewand 20; eine ähnliche Winkellage weist der Flansch 25 zur Stützwand 21 auf, welcher Flansch 25 im stumpfen Winkel α zu einer Horizontalen 27 ausgerichtet ist. Die zweite Stützwand 22 ist mit einem relativ kurzen, horizontalen Teilstück 28 von der Auflagewand 20 weggeführt und an ein rechtwinkelig oder stumpfwinkelig zur Auflagewand 20 sich erstreckendes Teilstück 29 angeschlossen, das in ein horizontales Teilstück 30 übergeht, letzteres ist als senkrechtes Teilstück 31 fortgeführt, das in den horizontalen Flansch 26 übergeht. Die Flansche 25,26 sind an einen ersten Wandabschnitt 32 bzw. zweiten Wandabschnitt 33 der Wandstruktur 11 herangeführt und dort mittels Klebungen 34,35 in Lage gehalten. Zur bündigen Aufnahme des Flansches 25 ist der erste Wandabschnitt 32 mit einer Ausnehmung 36 ausgestattet Außerdem kann ein Hohlraum 37 des Hohlträgers 19' mit geeignetem Material vorzugsweise Schaumstoff ausgefüllt sein, der u.a. zur Verstärkung des Hohlträgers 19' dient.

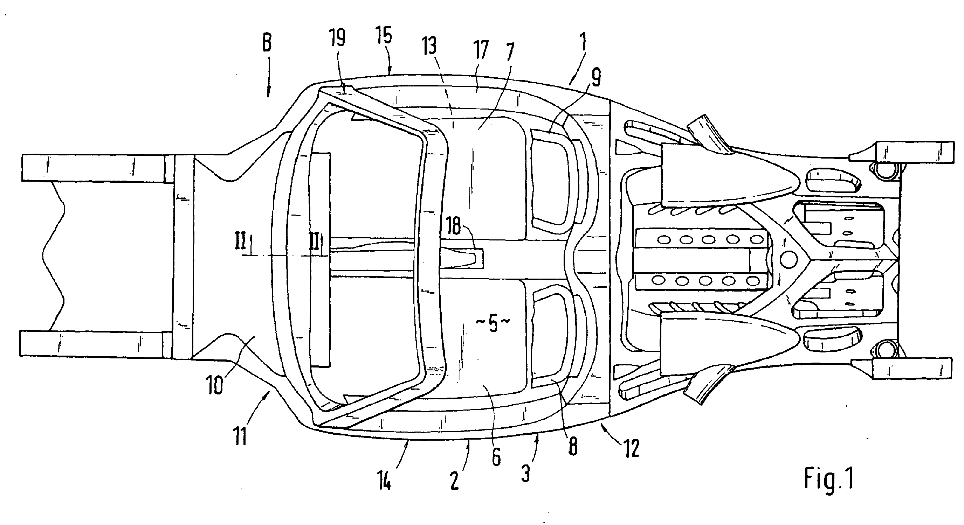

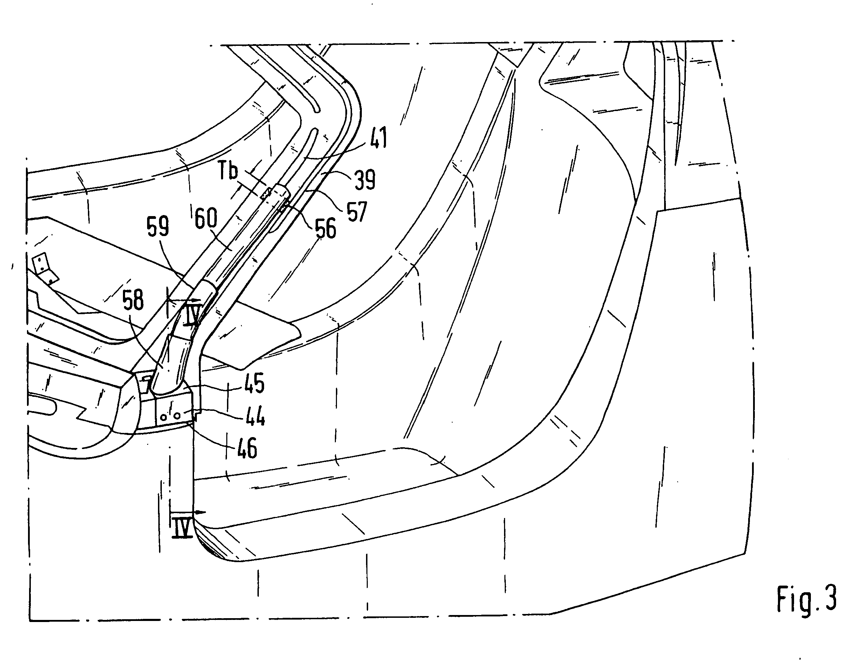

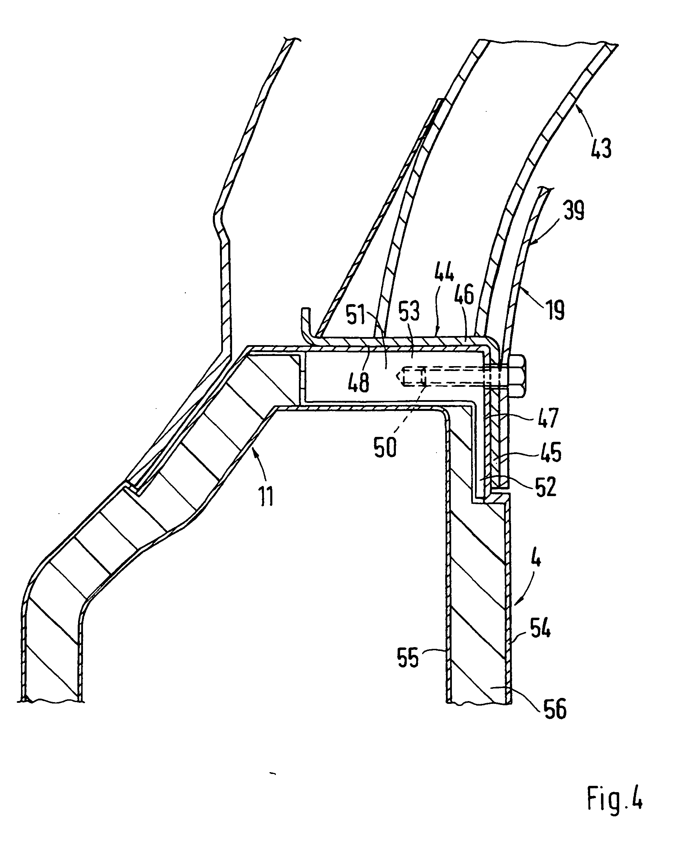

Der Windschutzscheibenrahmen 19 weist aufrechte Säulen 39,40, sogenannte A-Säulen, auf - Fig. 1-, die mit Hohlräumen 41,42 versehen sind, in denen Stützsäulen 43 - Fig. 3 - sich erstrecken. Jede Stützsäule 43 besteht aus Metall - hochfeste Stahl- oder Aluminiumlegierung - und ist mit der vorderen Wandstruktur 11 verbunden. Dabei ist die Stützsäule 43 unter Vermittlung einer Halteplatte 44 an besagter Wandstruktur in Lage gehalten, welche Halteplatte 44 im Winkel zueinander verlaufende Schenkel 45,46 - Fig. 4 - besitzt. Die Schenkel 45,46 liegen an korrespondierenden Wandbereichen 47,48 der vorderen Wandstruktur 11 an, und die Halteplatte 44 ist unter Vermittlung von Schrauben 49 befestigt, die mit Gewindebohrungen 50 eines metallischen Einsatzes 51 zusammenarbeiten. Der winkelförmige Schenkel 52, 53 aufweisende Einsatz 51 ist in vordere Wandstruktur 11 integriert, dergestalt, dass dieser Einsatz von Begrenzungswänden 54,55 der Wandstruktur 11 umgeben ist, die außerhalb des Einsatzes 51 einen Kern 54 umgeben; eine entsprechende Ausführung ist der EP 0 286 058 A2 zu entnehmen. Zwischen der Stützsäule 43 und der Säule 39 ist ein etwa auftretende Relativbewegungen begrenzender Schaumstoffkörper 56 vorgesehen - Fig. 3 -, der sich lediglich über eine relativ kleinen Teilbereich Tb der Länge der Stützsäule 43 und benachbart einem freien Ende 57 von letzterer angeordnet ist. Außerdem besteht die Stützsäule 41 aus drei ineinander geschobene Rohre 58,59,60 die im Ausführungsbeispiel einen kreisförmigen Querschnitt aufweisen und durch einen Presssitz gehalten werden.

## Patentansprüche

1. Aufbaustruktur für ein Fahrzeug, insbesondere einen Personenkraftwagen, die eine Fahrgastzelle mit einem Windschutzscheibenrahmen aufweist, welcher Windschutzscheibenrahmen mit einer Wandstruktur der Fahrgastzelle verbunden ist, **dadurch gekennzeichnet, dass** die Wandstruktur (11) der Fahrgastzelle (4) und der Windschutzscheibenrahmen (19) aus hochfestem nicht metallischem Werkstoff bspw. faserverstärktem Kunststoff bestehen und baulich vereinigt sind, wobei der Windschutzscheibenrahmen (19) auf einer der Wandstruktur zugekehrten Seite (B) mit Flanschen (25,26) versehen ist, die mittels Klebungen (34) an einem ersten Wandabschnitt (32) und an einem zweiten Wandabschnitt (33) der Wandstruktur (11) in Lage gehalten sind.

2. Aufbaustruktur nach Anspruch 1, **dadurch gekennzeichnet, dass** in Hohlräumen (41,42) von Säulen (39,40) des Windschutzscheibenrahmens (19) zusätzliche bspw. aus hochfestem Metall bestehende Stützsäulen (43) vorgesehen sind, die mit der vorderen Wandstruktur (11) verbunden sind.

3. Aufbaustruktur nach Anspruch 2, **dadurch gekennzeichnet, dass** jede Stützsäule (43) unter Vermittlung einer Halteplatte (44) an der vorderen Wandstruktur (11) in Lage gehalten ist.

4. Aufbaustruktur nach Anspruch 3, **dadurch gekennzeichnet, dass** die Halteplatte (44) im Winkel zueinander verlaufende Schenkel (45,46) aufweist, die an korrespondierenden Wandbereichen (47,48) der vorderen Wandstruktur (11) anliegen.

5. Aufbaustruktur nach Anspruch 3, **dadurch gekennzeichnet, dass** die Halteplatte (44) unter Vermittlung von Schrauben (49) in Lage gehalten ist, die mit Gewindebohrungen (50) eines bspw. metallischen in die vordere Wandstruktur (11) integrierten Einsatzes (50) zusammenwirken.

6. Aufbaustruktur nach einem oder mehreren der vorangehenden Ansprüche, **dadurch gekennzeichnet, dass** die Stützsäulen (43) lediglich im Bereich freier Enden (57) unter Vermittlung eines Schaumstoffkörpers (56) mit den Säulen (39.40) des Windschutzscheibenrahmens (19) verbunden sind.

7. Aufbaustruktur nach einem oder mehreren der vorangehenden Ansprüche, **dadurch gekennzeichnet, dass** jede Stützsäule (43) wenigstens zwei ineinander geschobene Rohre (58,59,60) aufweist.

## Claims

1. A body structure for a vehicle, especially a passenger vehicle, which has a passenger cell with a windscreen frame, which windscreen frame is connected to a wall structure of the passenger cell, **characterised in that** the wall structure (11) of the passenger cell (4) and the windscreen frame (19) comprise high-strength, non-metallic material, for example fibre-reinforced plastics, and are structurally connected, wherein the windscreen frame (19), on a side (B) facing the wall structure, is provided with flanges (25, 26) which are held in position on a first wall portion (32) and on a second wall portion (33) of the wall structure (11) by means of adhesive joints (34).

2. A body structure according to claim 1, **characterised in that**, in cavities (41, 42) of pillars (39, 40) of the windscreen frame (19), additional supporting pillars (43) are provided which are connected to the front wall structure (11) and comprise e.g. high-strength metal.

3. A body structure according to claim 2, **characterised in that** each supporting pillar (43) is held in position on the front wall structure (11) by means of a holding plate (44).

4. A body structure according to claim 3, **characterised in that** the holding plate (44) has arms (45, 46) which extend at an angle to one another and lie against corresponding wall regions (47, 48) of the front wall structure (11).

5. A body structure according to claim 3, **characterised in that** the holding plate (44) is held in position by means of screws (49) which co-operate with threaded bores (50) in an e.g. metal insert (50) integrated into the front wall structure (11).

6. A body structure according to one or more of the preceding claims, **characterised in that** the supporting pillars (43) are connected to the pillars (39, 40) of the windscreen frame (19) only in the region of free ends (57) by means of a foamed body (56).

7. A body structure according to one or more of the preceding claims, **characterised in that** each supporting pillar (43) has at least two tubes (58, 59, 60) pushed into one another.

## Revendications

1. Structure de carrosserie pour un véhicule automobile, en particulier un véhicule de tourisme, qui comporte une cellule d'habitacle munie d'un cadre de pare-brise, lequel cadre est assemblé à une structure de paroi de la cellule d'habitacle, **caractérisée en ce que** la structure de paroi (11) de la cellule d'habitacle (4) et le cadre de pare-brise (19) sont réalisés dans un matériau non métallique très résistant, tel qu'une matière plastique renforcée par des fibres, et sont réunis sur le plan constructif, le cadre de pare-brise (19) étant muni, sur un côté (B) opposé à la structure de paroi, de brides (25, 26), qui sont maintenues en position par des assemblages collés (34) sur une première partie de paroi (32) et sur une deuxième partie de paroi (33) de la structure de paroi.

2. Structure de carrosserie selon la revendication 1, **caractérisée en ce que** dans des cavités (41, 42) de montants (39, 40) du cadre de pare-brise (19) sont prévus des montants d'appui (43) supplémentaires, qui sont réalisés par exemple en métal très résistant et qui sont assemblés à la structure de paroi avant (11).

3. Structure de carrosserie selon la revendication 2, **caractérisée en ce que** chaque montant d'appui (43) est maintenu en position sur la structure de paroi avant (11) par l'intermédiaire d'une plaque de fixation (44).

4. Structure de carrosserie selon la revendication 3, **caractérisée en ce que** la plaque de fixation (44) comporte des branches (45, 46), qui sont disposées en angle l'une par rapport à l'autre et qui sont en appui contre des zones de paroi (47, 48) correspondantes de la structure de paroi avant (11).

5. Structure de carrosserie selon la revendication 3, **caractérisée en ce que** la plaque de fixation (44) est maintenue en position par l'intermédiaire de vis (49), qui coopèrent avec des perçages taraudés (50) dans un insert (50), par exemple métallique, intégré dans la structure de paroi avant (11).

6. Structure de carrosserie selon une ou plusieurs des revendications précédentes, **caractérisée en ce que** les montants d'appui (43), uniquement dans la zone d'extrémités libres (57), sont assemblés par l'intermédiaire d'un corps en mousse (56) aux montants (39, 40) du cadre de pare-brise (19).

7. Structure de carrosserie selon une ou plusieurs des revendications précédentes, **caractérisée en ce que** chaque montant d'appui (43) comporte au moins deux tubes (58, 59, 60), emboîtés l'un dans l'autre.
